# EUROPÄISCHE PATENTSCHRIFT

(11) **EP 2 653 771 B1**
(45) Veröffentlichungstag und Bekanntmachung des Hinweises auf die Patenterteilung: **05.10.2016**
(21) Anmeldenummer: 13163862.9
(22) Anmeldetag: 16.04.2013
(51) Int. Cl.: F16M 11/42, H04N 5/222, G03B 17/56, B66D 1/76, B66C 11/18, B66C 13/40

(54) **Vorrichtung zur Bild- und/oder Datenübertragung**
Device for image and/or data transfer
Dispositif de transfert d'images et/ou de données

(30) Priorität: 20.04.2012 AT 4862012
(43) Veröffentlichungstag der Anmeldung: 23.10.2013
(73) Patentinhaber: CamCat Systems GmbH, 3031 Rekawinkel (AT)
(72) Erfinder: Brozek, Alexander, 1060 Wien (AT); Schindler, Thomas, 2513 Möllersdorf (AT)
(74) Vertreter: Müllner, Martin

(56) Entgegenhaltungen:
- FR-A1- 2 717 024
- US-A- 5 225 863
- US-A1- 2005 024 004
- US-A1- 2009 207 250
- US-A1- 2011 204 196

## Beschreibung

### Technisches Gebiet

Die Erfindung betrifft eine Vorrichtung zur Bild und/oder Datenübertragung von linear auf einer Seil- oder Schienenanordnung geführten Kameraanordnungen, umfassend eine die Kamera tragende Laufkatze, welche entlang der Seil- oder Schienenanordnung in zumindest zwei Bewegungsrichtungen antreibbar ist, wobei zur Datenübertragung ein Datenkabel, bevorzugt ein Lichtleiterkabel vorgesehen ist, wobei das Datenkabel mit der Kamera verbunden ist und von der Laufkatze entlang einer der beiden Bewegungsrichtungen entlang Seil- oder Schienenanordnung zu einer Kabeltrommel geführt ist, und wobei ein zweites Seil vorgesehen ist, welches von der Laufkatze weg zunächst in der anderen Bewegungsrichtung entlang der Seil- oder Schienenanordnung zur gleichen Kabeltrommel geführt ist, und wobei ferner das Datenkabel und das zweite Seil gegenläufig auf der Kabeltrommel aufgespult sind, sodass das Datenkabel mit dem zweiten Seil zusammen gleichsam ein umlaufendes Seil bilden.

### Stand der Technik

Auf Seilen oder Schienen geführte Kameraanordnungen werden häufig für die Übertragung von Sportveranstaltungen oder kulturellen Ereignissen eingesetzt. Häufig handelt es sich dabei um ein Seilbahnsystem mit zwei nebeneinander angeordneten Tragseilen und einem dazwischen mittig angeordneten Zugseil, mittels welchem eine Laufkatze entlang der beiden Tragseile bewegt werden kann. Durch das Vorsehen von zwei Tragseilen wird ein Pendeln der Kamera verhindert, außerdem erhöht es die Sicherheit, weil beim Bruch (nur) eines Tragseils die Kamera nicht abstürzt.

Damit die Kamera in beide Richtungen gezogen werden kann, ist das Zugseil als Umlaufseil ausgebildet mit zumindest einer Umlenkscheibe an den beiden Enden der Tragseile, wobei ein Trum zwischen den beiden Zugseilen läuft und an der Laufkatze fixiert ist und wobei das zweite Trum im Abstand davon parallel zurückläuft. Durch Antrieb einer der Umlenkscheiben wird das Zugseil und somit die Laufkatze angetrieben. Um den Anforderungen bei Sportveranstaltungen zu genügen, muss die Laufkatze entsprechend stark beschleunigt und abgebremst werden können, wodurch entsprechend kräftige Motoren und belastbare Zugseile zum Einsatz kommen.

Die Laufkatze trägt die Kamera sowie Einrichtungen zur Stabilisierung und die notwendige Energieversorgung. Die Bilddaten werden meist mittels Funk zum Boden übertragen und von dort in herkömmlicher Weise weiter über Datenkabel.

Die Übertragung mittels Funk hat jedoch den Nachteil, dass es immer wieder zu Bildstörungen kommt (z.B. wenn die zugeteilte Frequenz versehentlich von jemand anderem mitbenutzt wird), was bei Live-Übertragungen auch der Fernsehkonsument oft bemerkt. Außerdem ist unter bestimmten Umständen die Übertragung der Bilddaten über Funk überhaupt nicht möglich: Bei sehr großen Veranstaltungen kommt es nämlich zu Engpässen bei den verfügbaren Funkfrequenzen für die Übertragung, oder aber eine Funkübertragung ist aufgrund von Sicherheitsbestimmungen nicht zulässig. Bei der Anwesenheit wichtiger Persönlichkeiten, wie etwa Staatspräsidenten, wird aus Sicherheitsgründen sämtlicher Funkverkehr mittels Störsender blockiert.

Als Alternative bietet sich die Möglichkeit an, die Kamera mittels eines Datenkabels anzuschließen, welches für eine gute Qualität ein Lichtleiterkabel sein sollte. Damit das Datenkabel nicht bis zum Boden durchhängt, muss es bei Bewegung der Kamera auf eine Kabeltrommel aufgewickelt bzw. von dieser abgewickelt werden. Die Drehung der Kabeltrommel muss dabei mit dem Zugseil der Laufkatze exakt synchronisiert werden. Bereits geringe Unterschiede in der Synchronisation (z.B. wegen des unvermeidbaren Schlupfs des Zugseils) können zu einer unzulässig hohen Zugspannung im Datenkabel oder zu einem unzulässig starken Durchhang führen. Im Falle der bevorzugt eingesetzten Lichtleiter reicht bereits eine relativ geringe Zugspannung aus, um das empfindliche Kabel zu strecken und die Datenübertragung zu beeinträchtigen bzw. zu unterbrechen. Umgekehrt kann es aber auch passieren, dass das Datenkabel zu langsam aufgewickelt (oder zu schnell abgewickelt) wird, wodurch es zu stark (unter Umständen bis zum Boden) durchhängt und so die Veranstaltung stört.

Für die Kabeltrommel wird bei dieser fiktiven Ausführungsform ein weiterer Antrieb (zusätzlich zum Zugseilantrieb) benötigt. Derartige Anlagen sind also oftmals kostspielig und fehleranfällig und können sogar zur Störung der Veranstaltung führen.

In der US 2005024004 A ist eine Vorrichtung gezeigt, die zur Bild und/oder Datenübertragung geeignet ist und über mehrere Seilschleifen in allen Raumrichtungen bewegbar ist. Die Vorrichtung umfasst eine eine Kamera tragende Laufkatze, wobei zur Datenübertragung ein Datenkabel, beispielsweise ein Lichtleiterkabel, vorgesehen ist. Das Datenkabel ist mit der Kamera verbunden und ist von der Laufkatze entlang einer der Bewegungsrichtungen entlang der Seilanordnung zu einer Kabeltrommel geführt. Eine zweite Seilschleife ist vorgesehen, welche von der Laufkatze weg zunächst in die andere Bewegungsrichtung entlang der Seilanordnung zur gleichen Kabeltrommel geführt sein kann, wobei das Datenkabel und die zweite Seilschleife gegenläufig auf der Kabeltrommel aufgespult sein können.

Die US 2009207250 A offenbart eine Vorrichtung zur Bildübertragung mit einer linear auf einer Seil- oder Schienenanordnung geführten Kameraanordnung, umfassend eine Kamera tragende Laufkatze, welche entlang der Seil- oder Schienenanordnung in zwei oder vier Bewegungsrichtungen antreibbar ist, wobei zur Datenübertragung ein Datenkabel, bevorzugt ein Lichtleiterkabel, vorgesehen ist. Weiterhin offenbart diese Druckschrift noch eine Kabeltrommel mit einer Schnittstelle zur optischen Datenübertragung. Allerdings handelt es sich bei dieser Vorrichtung nicht um ein umlaufendes Seil, also eine Verbindung des Lichtleiterkabels mit einem zweiten Seil. Ein gegenläufiges Aufspulen auf eine gemeinsame Kabeltrommel wird durch die Offenbarung dieser Druckschrift auch nicht nahegelegt.

### Darstellung der Erfindung

Es ist eine Aufgabe der vorliegenden Erfindung, eine Vorrichtung zur Bild- und Datenübertragung von einer linear auf einer Seil- oder Schienenanordnung geführten Kameraanordnung zu schaffen, welche die bestehenden Probleme beseitigt und eine Übertragung der Bilddaten mittels Datenkabel auf einfache, störungsfreie und kostengünstige Weise ermöglicht.

Diese Aufgabe wird durch eine Vorrichtung der eingangs genannten Art erfindungsgemäß dadurch gelöst, dass die Kabeltrommel eine Schnittstelle zur Datenübertragung aufweist, und dass parallel zur Achse der Kabeltrommel für jedes Seil je eine Umlenkrollenanordnung vorgesehen ist, wobei jeweils eine randseitig stationär angeordnete Umlenkrolle das jeweilige Seil auf eine zweite, entlang einer Führung parallel zur Achse der Kabeltrommel verschiebbar angeordneten Umlenkrolle umlenkt und die zweite bewegliche Umlenkrolle das jeweilige Seil zum Aufspulen auf die Kabeltrommel bzw. zum Abspulen von der Kabeltrommel umlenkt, wobei die beiden Umlenkrollenanordnungen gegengleich angeordnet sind, sodass die stationären Umlenkrollen an entgegen gesetzten Seiten der Vorrichtung angeordnet sind, und wobei die Bewegung der beweglichen Umlenkrollen gekoppelt ist.

Der Begriff "Seil" soll hier im physikalischen Sinn verstanden werden, also ein elastisches Element bezeichnen, das zur Übertragung von Zugkräften geeignet ist. Auch ein Datenkabel ist in diesem Sinne ein "Seil". Daher wird das Datenkabel auch als "erstes Seil" bezeichnet. Gemäß der Erfindung gibt es hier also (zusätzlich zu Tragseil(en) und Zugseil(en)) zwei weitere Seile, die zusammen - zusätzlich zum Zugseil - ein weiteres umlaufendes Seil ergeben, das allerdings auf der Kabeltrommel unterbrochen ist (d.h. zwei freie Enden hat), sodass das Signal aus dem Datenkabel abgegriffen werden kann.

Durch das Vorsehen einer einzigen Kabeltrommel kann diese passiv als Mitläufertrommel ausgebildet sein. Je nachdem, in welche Richtung die Laufkatze bewegt wird, werden die beiden Seile entsprechend auf- und abgespult: Wenn das Datenkabel abgewickelt wird, dreht dieses die Kabeltrommel so, dass das zweite Seil aufgewickelt wird, und wenn das zweite Seil abgewickelt wird, dreht dieses die Kabeltrommel so, dass das Datenkabel aufgewickelt wird. Auf diese Weise ist ein übermäßiger Durchhang nicht möglich, wichtig ist lediglich, dass die beiden Seile etwa gleich schwer sind und etwa gleichen Durchmesser haben.

Ein Motor zur Synchronisierung des Spulmechanismus des Datenkabel mit jenem des Zugseils ist nicht notwendig, da die über die gesamte Anlage laufende Summe der Kabellängen an jedem Punkt gleich bleibt.

Eine Umlenkanordnung ist notwendig, um die beiden Seile auf der Kabeltrommel exakt zu platzieren und somit ein unerwünschtes Überlagern der beiden Seile zu vermeiden.

Durch die notwendige Vorspannung der Seile kommt es zu Zugkräften, welche sich auf die Umlenkrollenanordnungen auswirken. Diese Zugkräfte sind bei den beweglichen Umlenkrollen insofern problematisch, als sie sich in eine Richtung wesentlich leichter bewegen lassen (oder sogar gebremst werden müssen) als in die andere Richtung. Deshalb wäre ein leistungsstarker Antrieb für eine einzelne Umlenkrolle notwendig. Durch das Vorsehen einer Kopplung zwischen den beiden Umlenkrollen heben sich diese entgegengesetzt wirkenden Kräfte auf, sodass ein gemeinsamer Antrieb weniger leistungsfähig sein kann und insbesondere nicht in der Lage sein muss, Bremskräfte aufzubringen.

Ein weiteres Merkmal der Erfindung ist es, dass das zweite Seil auch ein Datenkabel, bevorzugt ein Lichtleiterkabel, ist, welches auch mit der Kamera verbunden ist. Dadurch ergibt sich der Vorteil, dass selbst bei Beschädigung eines Datenkabels eine unterbrechungsfreie Übertragung über das andere Datenkabel immer noch möglich ist.

Gemäß einem weiteren Merkmal der Erfindung ist es vorgesehen, dass die Kabeltrommel mittels eines Motors antreibbar ist. Bei korrekter Ansteuerung des Motors können die Kräfte auf die Seile reduziert werden, weil die Seile dann die Kabeltrommel nicht mehr beschleunigen müssen. Dennoch ist auch bei falscher Ansteuerung des Motors ein übermäßiger Durchhang der Seile ausgeschlossen.

Ein weiteres Merkmal der Erfindung ist es, dass die beiden beweglichen Umlenkrollen mittels jeweils einer Spindel parallel zur Achse der Kabeltrommel bewegbar sind, wobei die beiden Spindeln durch eine separate oder eine gemeinsame Kraftübertragung, beispielsweise durch einen Zahnriemen, antreibbar sind, wobei die Gewinde der Spindeln die gleiche Gangrichtung aufweisen, sodass sich die beweglichen Umlenkrollen beim Antrieb der Spindeln in die gleiche Richtung bewegen.

In einer möglichen Ausführungsform ist die Kraftübertragung der beiden Spindeln mit einem gemeinsamen Motor verbunden, welcher die beiden Spindeln antreibt. Der Motor muss in diesem Fall mit der Bewegung der Kabeltrommel synchronisiert sein. Vorteilhaft ist dabei, dass das Verhältnis zwischen Drehung der Kabeltrommel und Drehung der Spindeln leicht geändert werden kann (z.B. wenn Seile mit anderem Durchmesser eingesetzt werden).

In einer alternativen Ausführungsform ist die Kraftübertragung mit der Achse der Kabeltrommel verbunden, welche somit die beiden Spindeln antreibt. Dadurch entfällt ein eigener Antrieb.

Schließlich ist es ein Merkmal der Erfindung, dass die Kabeltrommel einen kabeltragenden Zylinder sowie zwei drehbar gelagerte Achsabschnitte aufweist, wobei der Zylinder mit den beiden Achsabschnitten jeweils über Federpakete verbunden ist. Bei den eingesetzten Seil- bzw. Schienenanordnungen für Kameras ist es Vorschrift, eine Notbremseinrichtung vorzusehen. Bei einer Notbremsung wird die Laufkatze abrupt angehalten (mit rund 20 m/s²). Aufgrund der Trägheit der Kabeltrommel wirkt dadurch plötzlich eine erhöhte Zugkraft auf die Seile, sodass diese beschädigt werden könnten. Aus diesem Grund ist es vorteilhaft, eine Dämpfung vorzusehen. Durch die Lagerung des kabeltragenden Zylinders über Federpakete wirkt bei einer Notbremsung nicht die gesamte Masse der Vorrichtung sofort auf die Seile, sondern nur die Masse des kabeltragenden Zylinders; der Einfluss der Masse der übrigen Teile wird durch die Federn abgefangen und auf einen längeren Zeitraum verteilt.

### Kurze Beschreibung der Abbildungen der Zeichnungen

Die Erfindung wird nun anhand der beiliegenden Zeichnungen näher erläutert, wobei

Fig. 1 eine schematische Ansicht des erfindungsgemäßen Prinzips mit einer Kabeltrommel in Stirnansicht zeigt;
Fig. 2 die Kabeltrommel in Seitenansicht zeigt;
Fig. 3 die Kabeltrommel mit Seillegevorrichtung zeigt;
Fig. 4 eine Seitenansicht der Vorrichtung gemäß Fig. 3 zeigt; und
Fig. 5 eine geschnittene schematische Detailansicht einer Lagerung der Kabeltrommel darstellt.

### Weg(e) zur Ausführung der Erfindung

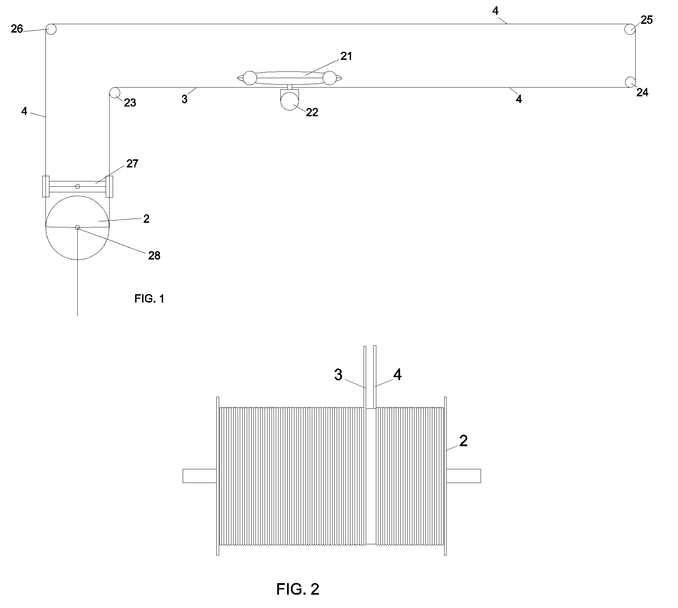

In Fig. 1 ist schematisch die erfindungsgemäße Anordnung gezeigt. Eine Laufkatze 21, an der eine Kamera 22 befestigt ist, ist auf Tragseilen (nicht dargestellt) verfahrbar. Zum Antrieb dient ein umlaufendes Zugseil (nicht dargestellt).

Von der Kamera 22 geht ein Datenkabel 3 weg, welches zunächst in einer der beiden Bewegungsrichtungen parallel zu den Tragseilen verläuft und dann über eine Umlenkscheibe 23 und eine Seillegevorrichtung 27 zu einer Kabeltrommel 2 geführt ist. Weiters geht in der anderen Bewegungsrichtung ein Seil 4 weg, das zunächst ebenfalls parallel zu den Tragseilen verläuft und über zwei Umlenkscheiben 24, 25 zunächst in die Gegenrichtung umgelenkt wird und schließlich über eine weitere Umlenkscheibe 26 und die Seillegevorrichtung 27 zu derselben Kabeltrommel 2 geführt ist. Das Seil 4 soll dabei den gleichen Durchmesser und das gleiche Gewicht pro Länge aufweisen wie das Datenkabel 3. Es kann insbesondere auch als weiteres Datenkabel ausgebildet sein.

Wie man aus Fig. 2 erkennt, sind die beiden Seile 3, 4 jeweils bis zu den axialen Enden der Kabeltrommel 2 auf dieser aufgewickelt. Das Datenkabel 3 ist beim axialen Ende der Kabeltrommel 2 bis zur Achse geführt, wo sich ein Drehkoppler 28 befindet, um die Signale in ein ortsfestes Datenkabel einzuspeisen.

Die Seile 3, 4 sind Windung um Windung nebeneinander auf der Kabeltrommel 2 aufgewickelt, wobei der Wicklungssinn der beiden Seile 3, 4 gegensinnig ist. Im mittleren Bereich der Kabeltrommel 2 werden die beiden Seile 3, 4 von der Kabeltrommel 2 abgezogen, wobei die genaue Lage davon abhängt, wo sich gerade die Laufkatze mit der Kamera befindet.

Bewegt sich die Laufkatze 21 - wie in Fig. 1 gesehen - nach rechts, dann wird das Datenkabel 3 nachgezogen und die Kabeltrommel in eine Bewegung gegen den Uhrzeigersinn versetzt; dadurch wird das Seil 4 aufgewickelt (und das Datenkabel 3 abgewickelt). Die Stelle (Fig. 2), wo Datenkabel 3 und Seil 4 abgezogen werden, bewegt sich langsam nach links (die Seillegevorrichtung 27 wird entsprechend angesteuert, wie noch genauer erklärt wird). Bewegt sich die Laufkatze 21 - wie in Fig. 1 gesehen - nach links, so wird das Seil 4 nachgezogen und die Kabeltrommel in eine Bewegung im Uhrzeigersinn versetzt; dadurch wird das Datenkabel 3 aufgewickelt. Egal, wie die Laufkatze 21 bewegt wird, bleiben Datenkabel 3 und Seil 4 stets gleich gespannt und hängen nicht durch, ohne dass es dazu einer besonderen Steuerung bedarf.

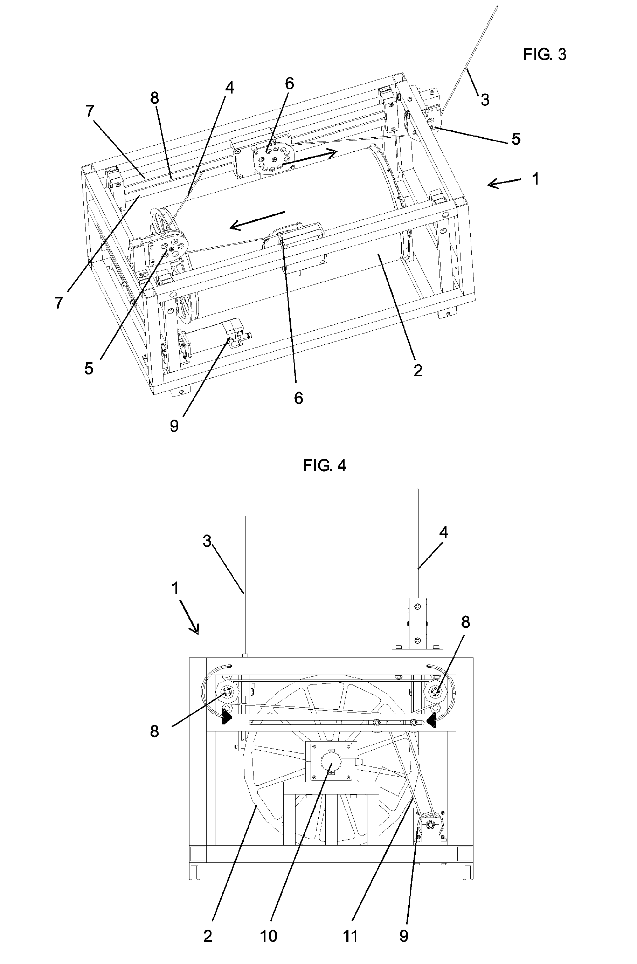

Anhand der Fig. 3-5 wird nun die Kabeltrommel 2 mit der Seillegevorrichtung 27 näher erläutert. Die Kabeltrommel 2 ist in einer Vorrichtung 1 drehbar gelagert. Über die Seillegevorrichtung 27 werden jeweils das Datenkabel 3 und das zweite Seil 4 zur Kabeltrommel 2 geführt und auf dieser gegengleich auf- bzw. abgespult.

Damit die beiden Seile 3, 4 auf der Kabeltrommel nicht übereinander zu liegen kommen, ist die Seillegevorrichtung 27 vorgesehen, die für jedes Seil 3, 4 eine Umlenkrollenanordnung bestehend aus einer stationären Umlenkrolle 5 und einer beweglichen Umlenkrolle 6 aufweist. Jedes Seil 3, 4 wird über jeweils eine stationäre Umlenkrolle 5 an die Vorrichtung herangeführt. Die stationäre Umlenkrolle 5 übergibt das Seil 3, 4 an jeweils eine bewegliche Umlenkrolle 6 und diese überführt das jeweilige Seil 3, 4, auf die Kabeltrommel 2. Die beweglichen Umlenkrollen 6 sind an Führungsstäben 7 geführt, welche parallel zur Achse 10 der Kabeltrommel 2 angeordnet sind. Bewegt werden die beweglichen Umlenkrollen 6 jeweils mittels einer Spindel 8. Die beiden Spindeln 8 sind in der gezeigten Ausführungsform mit einem gemeinsamen Zahnriemen 11 mit einem Motor 9 verbunden (siehe Fig. 4). Durch die Vorspannung der Seile 3, 4 kommt es zu Zugkräften, welche in Fig. 3 und Fig. 4 durch Kraftpfeile dargestellt sind. Die Kräfte der beiden Seile 3, 4 wirken entgegengesetzt. Durch den Zahnriemen 11 als gemeinsame Kraftübertragung heben sich diese Kräfte auf, da sie im Wesentlichen gleich groß sind. Dadurch kann die Belastung für den Motor 9 minimiert werden. In einer bevorzugten Ausführungsform kann die Kraftübertragung auch mit der Achse 10 der Kabeltrommel 2 verbunden sein und somit durch diese angetrieben werden. Vorteil dabei wäre, dass auf einen zusätzlichen Motor gänzlich verzichtet werden kann.

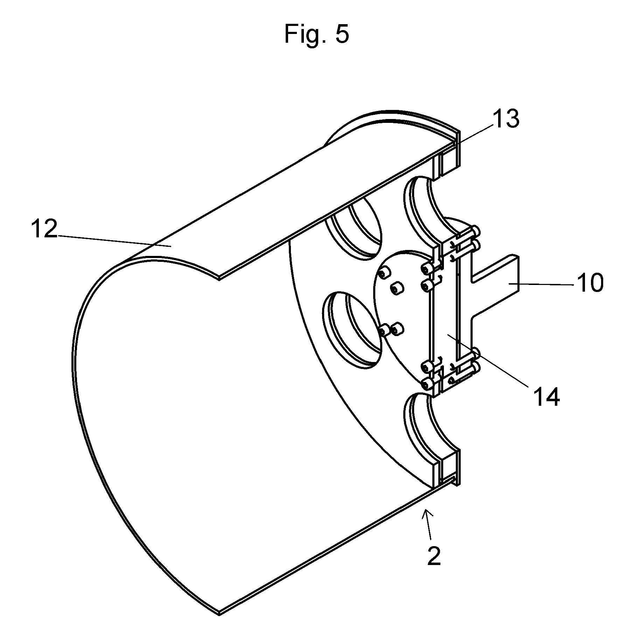

Fig. 5 zeigt eine mögliche Dämpfung der Kabeltrommel 2, um im Falle einer Notbremsung der Laufkatze 21 die Trägheitskräfte teilweise aufzufangen und das empfindliche Datenkabel 3 weniger zu belasten. Die Kabeltrommel 2 umfasst dabei im Wesentlichen einen Zylinder 12, auf welchem die beiden Seile 3, 4 aufgespult sind, und zwei Achsabschnitte 13, welche drehbar gelagert sind. Die Verbindung zwischen Zylinder 12 und Achsabschnitten 13 erfolgt über Federpakete 14, die bei einer abrupten Bremsung eine gewisse Verdrehung des Zylinders 12 gegenüber den Achsabschnitten 13 zulassen und somit zur Dämpfung der Kraftspitze beitragen.

Ein Vorteil der Erfindung besteht darin, dass das Datenkabel 3 und das zweite Seil 4 vom eigentlichen bewilligungspflichtigen Seilbahnsystem unabhängig sind. D.h. selbst wenn während einer Veranstaltung das Datenkabel 3 beschädigt wird, kann es getauscht werden, ohne dass deshalb eine neue Bewilligung des Seilbahnsystems notwendig wird. (Eine neue Bewilligung wäre während einer Veranstaltung aus Zeitgründen nicht möglich).

## Patentansprüche

1. Vorrichtung zur Bild und/oder Datenübertragung von linear auf einer Seil- oder Schienenanordnung geführten Kameraanordnungen, umfassend eine die Kamera (22) tragende Laufkatze (21), welche entlang der Seil- oder Schienenanordnung in zumindest zwei Bewegungsrichtungen antreibbar ist, wobei zur Datenübertragung ein Datenkabel (3), bevorzugt ein Lichtleiterkabel vorgesehen ist, wobei das Datenkabel (3) mit der Kamera verbunden ist und von der Laufkatze entlang einer der beiden Bewegungsrichtungen entlang Seil- oder Schienenanordnung zu einer Kabeltrommel (2) geführt ist, und wobei ein zweites Seil (4) vorgesehen ist, welches von der Laufkatze weg zunächst in der anderen Bewegungsrichtung entlang der Seil- oder Schienenanordnung zur gleichen Kabeltrommel (2) geführt ist, und wobei ferner das Datenkabel (3) und das zweite Seil (4) gegenläufig auf der Kabeltrommel (2) aufgespult sind, sodass das Datenkabel (3) mit dem zweiten Seil (4) zusammen gleichsam ein umlaufendes Seil bilden, **dadurch gekennzeichnet, dass** die Kabeltrommel (2) eine Schnittstelle zur Datenübertragung aufweist, und dass parallel zur Achse (10) der Kabeltrommel (2) für jedes Seil (3,4) je eine Umlenkrollenanordnung vorgesehen ist, wobei jeweils eine randseitig stationär angeordnete Umlenkrolle (5) das jeweilige Seil (3,4) auf eine zweite, entlang einer Führung (7) parallel zur Achse der Kabeltrommel (2) verschiebbar angeordneten Umlenkrolle (6) umlenkt und die zweite bewegliche Umlenkrolle (6) das jeweilige Seil (3,4) zum Aufspulen auf die Kabeltrommel (2) bzw. zum Abspulen von der Kabeltrommel (2) umlenkt, wobei die beiden Umlenkrollenanordnungen gegengleich angeordnet sind, sodass die stationären Umlenkrollen (5) an entgegen gesetzten Seiten der Vorrichtung (1) angeordnet sind, und wobei die Bewegung der beweglichen Umlenkrollen gekoppelt ist.

2. Vorrichtung zur Bild und/oder Datenübertragung nach Anspruch 1, **dadurch gekennzeichnet, dass** das zweite Seil (4) auch ein Datenkabel, bevorzugt ein Lichtleiterkabel ist, welches auch mit der Kamera verbunden ist.

3. Vorrichtung zur Bild und Datenübertragung nach Anspruch 1 oder 2, **dadurch gekennzeichnet, dass** die Kabeltrommel (2) mittels eines Motors antreibbar ist.

4. Vorrichtung zur Bild und/oder Datenübertragung nach einem der Ansprüche 1 bis 3, **dadurch gekennzeichnet, dass** die beiden beweglichen Umlenkrollen (5) mittels jeweils einer Spindel (8) parallel zur Achse (10) der Kabeltrommel (2) bewegbar sind, wobei die beiden Spindeln (8) durch eine separate oder eine gemeinsame Kraftübertragung, beispielsweise durch einen Zahnriemen (11), antreibbar sind, wobei die Gewinde der Spindeln (8) die gleiche Gangrichtung aufweisen, sodass sich die beweglichen Umlenkrollen (5) beim Antrieb der Spindeln (8) in die gleiche Richtung bewegen.

5. Vorrichtung zur Bild und/oder Datenübertragung nach Anspruch 4, **dadurch gekennzeichnet, dass** die Kraftübertragung der beiden Spindeln (8) mit einem gemeinsamen Motor (9) verbunden ist, welcher die beiden Spindeln (8) antreibt.

6. Vorrichtung zur Bild und/oder Datenübertragung nach Anspruch 4, **dadurch gekennzeichnet, dass** die Kraftübertragung mit der Achse (10) der Kabeltrommel (2) verbunden ist, welche somit die beiden Spindeln antreibt.

7. Vorrichtung zur Bild und Datenübertragung nach einem der Ansprüche 1 bis 6, **dadurch gekennzeichnet, dass** die Kabeltrommel (2) einen kabeltragenden Zylinder (12) sowie zwei drehbar gelagerte Achsabschnitte (13) aufweist, wobei der Zylinder (12) mit den beiden Achsabschnitten (13) jeweils über Federpakete (14) verbunden ist.

## Claims

1. A unit (1) for transmitting pictures and/or data from camera assemblies that are linearly guided on a cable or rail assembly, comprising a travelling carriage (21), which carries the camera (22), the carriage being drivable along the cable or rail assembly in at least two directions, a data cable (3), preferably an optical fibre cable, being provided for the transmission of the data, the data cable (3) being connected to the camera and being guided from the travelling carriage to a cable drum (2) along one of the two directions of movement along the cable or rail assembly, and a second cable (4) being provided, which is guided to the same cable drum (2) initially away from the travelling carriage in the other direction of movement along the cable or rail assembly, and furthermore, the data cable (3) and the second cable (4) being wound onto the cable drum (2) in opposite directions, so that the data cable (3) together with the second cable (4) form as it were a continuous cable, **characterized in that** the cable drum (2) has an interface for the data transmission, and that parallel to the axis (10) of the cable drum (2), a deflection pulley assembly is provided for each cable (3, 4), a deflection pulley (5) that is fixedly located at the edge in each case diverting the respective cable (3, 4) onto a second deflection pulley (6) that is located to be displaceable parallel to the axis of the cable drum (2) along a guide (7), and the second movable deflection pulley (6) diverting the respective cable (3, 4) for winding onto the cable drum (2) or for unwinding from the cable drum (2), the two deflection pulley assemblies being arranged in mirror-image of one another, so that the fixed deflection pulleys (5) are located at opposite sides of the unit (1), and the movement of the movable deflection pulleys is coupled.

2. A unit according to Claim 1 for transmitting pictures and/or data, **characterized in that** the second cable (4) is also a data cable, preferably an optical fibre cable, which is also connected to the camera.

3. A unit according to Claim 1 or 2 for transmitting pictures and/or data, **characterized in that** the cable drum (2) is drivable by means of a motor.

4. A unit according to any of Claims 1 to 3 for transmitting pictures and/or data, **characterized in that** the two movable deflection pulleys (5) are movable parallel to the axis (10) of the cable drum (2) by means of, in each case, a spindle (8), the two spindles (8) being drivable by a separate or a common power transmission, for example by a toothed belt (11), the threads of the spindles (8) having the same hand, so that when the spindles (8) are driven, the movable deflection rollers (5) move in the same direction.

5. A unit according to Claim 4 for transmitting pictures and/or data, **characterized in that** the power transmission for the two spindles (8) is connected to a common motor (9), which drives the two spindles (8).

6. A unit according to Claim 4 for transmitting pictures and/or data, **characterized in that** the power transmission is connected to the rotary shaft (10) of the cable drum (2), which therefore drives the two spindles (8).

7. A unit according to any of Claims 1 to 6 for transmitting pictures and/or data, **characterized in that** the cable drum (2) has a cable-carrying cylinder (12) and two rotatably-mounted rotary shaft portions (13), the cylinder (12) being connected to the two shaft portions (13) by in each case a spring package (14).

## Revendications

1. Dispositif de transmission d'images et/ou de données issues de systèmes de caméra guidés linéairement sur un système de câble porteur ou de rail, comprenant un chariot (21) qui porte la caméra (22) et qui peut être déplacé par une force le long du système de câble porteur ou de rail dans au moins deux sens de marche, un câble de données (3) permettant de transmettre des données, s'agissant préférentiellement d'un câble conducteur de lumière, le câble de données (3) étant relié à la caméra et s'étendant, depuis le chariot, dans l'un des deux sens de marche le long du système de câble porteur ou de rail vers un enrouleur (2), et un deuxième câble (4) s'étendant, depuis le chariot, initialement dans l'autre sens de marche le long du système de câble porteur ou de rail vers le même enrouleur (2), le câble de données (3) et le deuxième câble (4) étant en outre enroulés dans des sens opposés sur l'enrouleur (2), de manière à ce que le câble de données (3) forme, avec le deuxième câble (4), un câble continu se déplaçant selon une trajectoire en boucle, **caractérisé en ce que** l'enrouleur (2) comporte une interface de transmission de données et que l'enrouleur (2) est pourvu, pour chacun des câbles (3, 4), d'un système de poulie de renvoi qui est disposé parallèlement à son axe (10) et qui comporte une poulie de renvoi (5) fixe en disposition marginale servant à renvoyer le câble (3, 4) concerné sur une deuxième poulie de renvoi (6) pouvant être déplacée le long d'un guidage (7) dans une direction parallèle à l'axe de l'enrouleur (2), la deuxième poulie (6) mobile permettant de renvoyer le câble (3, 4) concerné de manière à l'enrouler sur l'enrouleur (2) ou de le dérouler de l'enrouleur (2), les deux systèmes de poulies de renvoi étant identiques mais en disposition diamétralement opposée, faisant en sorte que les poulies de renvoi (5) fixes se trouvent sur des côtés opposés du dispositif (1), les déplacements des poulies de renvoi mobiles étant couplés l'un à l'autre.

2. Dispositif de transmission d'images et/ou de données selon la revendication 1, **caractérisé en ce que** le deuxième câble (4) est également un câble de données, de préférence un câble conducteur de lumière, lequel est également relié à la caméra.

3. Dispositif de transmission d'images et de données selon les revendications 1 ou 2, **caractérisé en ce que** l'enrouleur (2) peut être entraîné par un moteur.

4. Dispositif de transmission d'images et/ou de données selon l'une des revendications 1 à 3, **caractérisé en ce que** les deux poulies de renvoi (5) mobiles peuvent être déplacées chacune dans une direction parallèle à l'axe (10) de l'enrouleur (2) au moyen d'une vis (8), les deux vis (8) pouvant être entraînées chacune par un organe de transmission de force séparé ou par un organe commun, s'agissant par exemple d'une courroie dentée (11), les filets des vis (8) évoluant dans le même sens, de manière à ce que les poulies de renvoi (5) mobiles se déplacent dans le même sens lorsque les vis (8) sont entraînées.

5. Dispositif de transmission d'images et/ou de données selon la revendication 4, **caractérisé en ce que** l'organe de transmission de force des deux vis (8) est relié à un moteur commun (9) qui entraîne les deux vis (8).

6. Dispositif de transmission d'images et/ou de données selon la revendication 4, **caractérisé en ce que** l'organe de transmission de force est relié à l'axe (10) de l'enrouleur (2) lequel vient ainsi entraîner les deux vis.

7. Dispositif de transmission d'images et/ou de données selon l'une des revendications 1 à 6, **caractérisé en ce que** l'enrouleur (2) comporte un cylindre (12) porteur de câbles ainsi que deux parties d'axe (13) montées rotatives, le cylindre (12) étant relié à chacune des parties d'axe (13) à travers des ensembles de ressorts (14) .
